# EUROPÄISCHE PATENTANMELDUNG

(11) **EP 3 065 053 A1**
(43) Veröffentlichungstag der Anmeldung: **07.09.2016**
(21) Anmeldenummer: 15195519.2
(22) Anmeldetag: 20.11.2015
(51) Int. Cl.: G06F 9/54, G06F 15/173

(54) **VERFAHREN UND VORRICHTUNG ZUR DATENVERARBEITUNG, INSBESONDERE ZUM DATENMANAGEMENT UND/ODER ZUR DATENANALYSE FÜR EINE ANLAGE**

(30) Priorität: 03.03.2015 DE 102015203749
(71) Anmelder: Siemens Aktiengesellschaft, 80333 München (DE)
(72) Erfinder: Fischer, Jan-Gregor, 85604 Zorneding (DE); Watzke, Michael, 81827 München (DE)

(57) **Zusammenfassung**

Die Erfindung betrifft ein Verfahren und Vorrichtung zur Datenverarbeitung für eine Anlage, insbesondere zum Datenmanagement und/oder zur Datenanalyse, wobei ein zumindest eine Datenquelle aufweisendes Datenverarbeitungssystem zur Ausführung des Verfahrens vorgesehen ist.

Die Erfindung beansprucht Verfahren zur Datenverarbeitung, das durch ein zumindest eine Datenquelle (DS) aufweisendes Datenverarbeitungssystem ausgeführt wird, wobei das Datenverarbeitungssystem mindestens eine Stapelverarbeitungs-Ebene, in der von der Datenquelle (DS) gesammelte Daten verarbeitet und Verarbeitungsergebnisse für deren Abfrage durch eine Applikation (BLA) aufbereitet werden, und mindestens eine Echtzeitverarbeitungs-Ebene vorsieht, in der von der Datenquelle eintreffende Daten unmittelbar verarbeitet und Verarbeitungsergebnisse für die Applikation (BLA) aufbereitet werden, dadurch gekennzeichnet, dass, wenn die Applikation (BLA) während ihrer Laufzeit auf wenigstens einen Wert der in den genannten Ebenen aufbereiteten Verarbeitungsergebnisse zugreift, dann eine für den Wert geeignete Rechenvorschrift der Applikation auf den wenigstens einen Wert angewendet wird.

## Beschreibung

Die Erfindung betrifft ein Verfahren und Vorrichtung zur Datenverarbeitung für eine Anlage, insbesondere zum Datenmanagement und/oder zur Datenanalyse, wobei ein zumindest eine Datenquelle aufweisendes Datenverarbeitungssystem zur Ausführung des Verfahrens vorgesehen ist.

Die Erfindung liegt auf dem Gebiet der Anlagentechnik, z.B. in der industriellen Fertigung. Es sind jedoch auch andere Anwendungen denkbar.

In dem Fachartikel von Objektspektrum (Ausgabe IT-Trends/ 2014) werden von den Autoren Mock, Sylla und Hecker Big-Data-Systeme diskutiert, die horizontal skalierbar sind und somit die Verarbeitung von großen Datenmengen in kurzer Zeit ermöglichen. Big-Data-Anwendungen profitieren von einer Vielzahl von Automatismen, die in den Big-Data-Systemen realisiert werden. Dafür müssen sie sich jedoch auf die Schnittstellen beschränken, die von den Big-Data-Systemen angeboten werden. Da es im Open-Source-Bereich eine große Reihe von Big-Data-Komponenten gibt, die alle verschiedene Schwerpunkte und Schnittstellen haben, ist eine auf die Anforderungen der Anwendung abgestimmte Auswahl und Komposition der Systemkomponenten unbedingt notwendig. Eine konstruktive Vorlage zum Treffen einer solchen Auswahl ist die Lambda-Architektur - wie sie auch unter http://lambda-architecture.net vorgestellt wird.

Diese Architektur unterscheidet zwischen einem Batch-Layer (Stapelverarbeitungsebene) für die Verarbeitung von großen Datenmengen und einem Speed- bzw. Realtime-Layer (Echtzeitverarbeitungsebene) für die zeitnahe Verarbeitung von Datenströmen. Beide Layer erzeugen Analyseergebnisse, die in skalierbaren Big-Data-Datenbanken abgelegt werden. Eine Anwendung führt die Ergebnisse aus Batch- und Speed-Layer zusammen und stellt sie dem Anwender zur Verfügung.

Nach einem Batch-Lauf bzw. Stapelverarbeitungslauf (Anwendung von Datenanalyse / Datenverarbeitungsaufgaben auf Massendaten) auf Basis der sog. Batch-Layer entsteht eine neue Version einer sog. Batch-View bzw. Stapelverarbeitungs-Sicht, d.h. eine spezielle Sicht auf die Verarbeitungsergebnisse bzw. Datenanalyseresultate eines Batch-Laufe, die durch Anwendungen abfragbar ist. Anwendungen sollen immer nur auf eine einzige Batch-View, d.h. auf die neueste Version des letzten Batch-Laufes zugreifen können. Um Konsistenzprobleme während der Erstellung von Batch-Views zu vermeiden sollen Anwendungen zudem erst auf eine neue Batch-View zugreifen, wenn diese vollständig erstellt wurde. Beide Ziele werden erreicht, indem neue Batch-View Versionen im Hintergrund berechnet werden, und erst nach Fertigstellung für Anwendungen bzw. Applikationen freigegeben werden (z.B. automatisches Umschalten von Views für Anwendungen, ohne dass sich diese explizit daran anpassen müssen). Ähnlich wie die Batch-Layer Batch-Views für die Abfrage von Datenanalyseergebnissen auf Massendaten erzeugt, so erzeugt die Speed Layer sog. Real-Time Views bzw. Echtzeitverarbeitungs-Sichten für die Abfrage von Datenanalyseergebnissen auf Basis der Akquisition und Verarbeitung hochfrequenter Daten. Abfragen von den Datenanalyseresultaten durch eine Applikation werden in der Regel durch fixe, statische View entkoppelt, die durch die Datenanalyseverarbeitung erzeugt werden.

Ein offenes zu lösendes Problem bei der Lambda Architektur ist eine nahtlose Integration beider Sichten.

Ausgehend von diesem Stand der Technik ist es Aufgabe der Erfindung, eine verbesserte Integration der genannten Sichten für ein solches Datenmanagement zu schaffen.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zur Datenverarbeitung, das durch ein zumindest eine Datenquelle aufweisendes Datenverarbeitungssystem ausgeführt wird,
wobei das Datenverarbeitungssystem mindestens eine Stapelverarbeitungs-Ebene, in der von der Datenquelle gesammelte Daten verarbeitet und Verarbeitungsergebnisse für deren Abfrage durch eine Applikation aufbereitet werden,
und mindestens eine Echtzeitverarbeitungs-Ebene vorsieht, in der von der Datenquelle eintreffende Daten unmittelbar verarbeitet und Verarbeitungsergebnisse für die Applikation aufbereitet werden,
dadurch gekennzeichnet,
dass, wenn die Applikation während ihrer Laufzeit auf wenigstens einen Wert der in den genannten Ebenen aufbereiteten Verarbeitungsergebnisse zugreift, dann eine für den Wert geeignete Rechenvorschrift der Applikation auf den wenigstens einen Wert angewendet wird.

Die genannte Datenverarbeitung kann Datenmanagement und/oder Datenanalyse umfassen.

Mittels der Echtzeit-Ebene kann eine zeitliche Verzögerung zwischen dem Sammeln von Daten, deren Verarbeitung in der Stapelverarbeitungs-Ebene und deren Aufbereitung überbrückt werden. Die Verarbeitungsergebnisse der Stapelverarbeitungs-Ebene können dabei in einer Stapelverarbeitungssicht aufbereitet und die Verarbeitungsergebnisse der Echtzeitverarbeitungs-Ebene können in einer Echtzeitverarbeitungssicht aufbereitet werden.

Eine Weiterbildung der Erfindung sieht vor, dass sich die geeignete Rechenvorschrift nach dem Datentyp des Wertes bestimmt.

Eine Applikation ist in der Regel ein Programm, das mehrere Rechenvorschriften, auch Funktionen genannt, aufweist. Der sogenannte Sourcecode einer Applikation kann kompiliert (= in Maschinenbefehle übersetzt) oder (in Maschinenbefehle) interpretiert werden und damit zur Ausführung gebracht werden. Wird eine Rechenvorschrift ausgeführt bzw. aufgerufen, werden Werte an definierte Parameter der Rechenvorschrift übergeben. Der Wert ist dann für eine bestimmte Rechenvorschrift geeignet, wenn der Datentyp des Wertes zu dem Datentyp eines der definierten Parameter der Rechenvorschrift passt. Ein Datentyp kann eine Konstante, ein Zahlenwert oder auch Mengen wie z.B. Sets, Listen, Arrays, Vektoren, Matrizen, etc. sein.

Das Datenverarbeitungssystem kann des Weiteren eine Integrationssicht vorsehen, die virtuell, d.h. nur scheinbar vorhanden, ausgebildet sein kann, die den Zugriff der Applikation auf die Verarbeitungsergebnisse in den genannten Ebenen koordiniert.

Das Datenverarbeitungssystem ist vorzugsweise in Form einer sogenannten Lamda-Architektur ausgestaltet.

Eine Ausführungsform der Erfindung kann vorsehen, dass nur über festgelegte Zugriffsfunktionen auf den wenigstens einen Wert der in den genannten Ebenen aufbereiteten Verarbeitungsergebnisse zugegriffen werden kann. Dies wird in der Informatik als Datenkapselung bezeichnet. Technisch hat dies den Vorteil, dass der Zugriff auf Daten plattformunabhängig kontrolliert bzw. koordiniert werden kann.

Die Funktionalität der Integrationssicht kann hierbei derart ausgestaltet sein, dass eine dynamische Bindung mindestens eines Parameters der Rechenvorschrift an wenigstens einen solchen Wert ermöglicht wird. In der Informatik spricht man von einer dynamischen bzw. späten Bindung von Parametern, wenn erst zur Laufzeit und nicht schon bei der Kompilierung des Programms (statische Bindung) die Parameter einer Rechenvorschrift an Werte gebunden werden. Technisch hat eine solche dynamische Bindung den Vorteil, dass bei Interaktionen mit Benutzern zum spätesten möglichen Zeitpunkt die Applikation bzw. das laufende Programm auf Eingaben des Benutzers entsprechend reagieren kann.

Um zur Laufzeit der entsprechenden Applikation den Zugriff auf Datenanalyseresultate bzw. Verarbeitungsergebnisse zu ermöglichen, wird erfindungsgemäß wie folgt vorgegangen:
1. Definition von Parametern in Form von Deklaration von freien Mengenvariablen, z.B. Sets, Listen, Arrays, Vektoren, Matrizen, etc. im Programm
2. Verwendung der sogenannten Lambda-Abstraktion. In http://www.tcs.ifi.lmu.de/lehre/ws-2010-11/rebe/lambda.pdf ist formal beispielhaft das Konzept des sogenannten Lamda-Kalkül beschrieben, das mathematisch Funktionen bzw. Rechenvorschriften beschreibt. Zur späten Bindung der im vorigen Schritt deklarierten Mengenvariablen an die Integrationssicht mittels Angabe von Funktionen, die freie Mengenvariablen auf Terme (Rechenvorschriften) abbildet. Hierbei handelt es sich um eine späte Bindung, d.h. die Ausführung der Funktionen erfolgt erst, wenn die Applikation auf die Werte(menge) der entsprechenden Mengenvariablen zugreift.
3. Die Integrationssicht verweist indirekt auf die Datenanalyseergebnisse der jeweiligen Ebene, indem sie durch Übergabe von Zugriffsfunktionen ihre eigene integrierte Sicht per Abbildung mittels der jeweils übergebenen Rechenvorschriften an Datenanalyseresultate bindet. Dabei werden durch die kontinuierliche und/oder periodische Ausführung der Zugriffsfunktionen die Datenanalyseresultate kontinuierlich und/oder periodisch abgeleitet werden.

Eine programmtechnische Implementierung des oben genannten erfindungsgemäßen Vorgehens wird im nachfolgenden Ausführungsbeispiel näher beschrieben.

Technisch wird ein automatisches Umschalten von verschiedenen ggf. in Sichten aufbereiteten Verarbeitungsergebnissen für Applikationen ermöglicht, ohne dass sich diese explizit angepasst werden müssen. Zugriffskonflikte bzw. Datenkonsistenzprobleme werden durch die späte Bindung vermieden.

Ein weiterer Aspekt der Erfindung sieht die Verwendung des oben genannten Verfahrens zum Betrieb einer Anlage vor.

Ein weiterer Aspekt der Erfindung sieht eine Vorrichtung mit einem zumindest eine Datenquelle aufweisenden Datenverarbeitungssystem zur Datenverarbeitung, insbesondere zum Datenmanagement und/oder Datenanalyse für eine Anlage vor, das derart eingerichtet ist, dass dieses mindestens eine Stapelverarbeitungs-Ebene, in der von der Datenquelle gesammelte Daten verarbeitet und Verarbeitungsergebnisse für deren Abfrage durch eine Applikation aufbereitet werden können, und mindestens eine Echtzeitverarbeitungs-Ebene aufweist, in der von der Datenquelle eintreffende Daten unmittelbar verarbeitet und Verarbeitungsergebnisse für die Applikation aufbereitet werden können,
gekennzeichnet durch
Mittel zum Ausführen einer Applikation, wobei während ihrer Laufzeit auf wenigstens einen Wert der in den genannten Ebenen aufbereiteten Verarbeitungsergebnisse zugegriffen werden kann und bei Zugriff eine für den Wert geeignete Rechenvorschrift der Applikation auf den wenigstens einen Wert angewendet werden kann.

Das Datenverarbeitungssystem sieht Mittel bzw. Module zur Durchführung des oben genannten Verfahrens vor, die jeweils hardwaremäßig und/oder firmwaremäßig und/oder softwaremäßig bzw. als Computerprogramm bzw. Computerprogrammprodukt ausgeprägt sein können.

Die Vorrichtung kann wie das oben beschriebene Verfahren entsprechend weitergebildet werden.

Ein weiterer Aspekt der Erfindung sieht eine Anlage mit mindestens einer solchen Vorrichtung vor.

Die Anlage kann dabei mindestens eine der folgenden Komponenten umfassen:
- eine Automatisierungsanlage,
- eine Fertigungsanlage,
- eine Produktionsanlage,
- eine Maschine,
- eine Windturbine,
- eine Strömungsmaschine,
- ein Energienetz,
- ein Stromverteilungsnetz,
- ein Lastverteilungsnetz,
- ein Kommunikationsnetz
- ein Krankenhausinformationssystem.

Ein weiterer Aspekt der Erfindung ist ein Computerprogrammprodukt bzw. ein Computerprogramm mit Mitteln zur Durchführung des oben genannten Verfahrens, wenn das Computerprogramm(produkt) in einer oben genannten Vorrichtung oder Anlage zur Ausführung gebracht wird.

Die Erfindung weist weiterhin folgende Vorteile auf:
- Nahtlose Integration von analytischen Workflows bzw. Arbeitsabläufen: Spezifikation als Teil der Programmiersprachenanweisungen in der Entwurfsphase als auch zur Laufzeit durch Abarbeitung der Programme durch Verwendbarkeit von Funktionen, deren Parameter selbst Funktionen sind. Da Lambda Terme selbst Funktionen sind, können Lambda Terme auf Argumente bzw. Parameter von Lambda Termen angewendet werden. Dies ermöglich die Kombinierbarkeit von Termen und somit die Zusammenstellung von Workflows, die zudem spät an Daten gebunden werden.
- Die Definition von Funkionen und deren Ausführung ist unabhängig voneinander. Das erfinderische Vorgehen ermöglicht durch Entkopplung von Daten und Datenanalyseverarbeitung auch eine optionale Optimierung der zugrundeliegenden Lambda-Ausdrücke (Funktionen).

- Austauschbarkeit der Zugriffsfunktionen samt Datenquellen zur Laufzeit. Damit wird z.B. ein transparenter Wechsel von einer Testumgebung in eine produktive Umgebung ermöglicht.
- Umsetzbarkeit mittels Hardware, z.B. in Form eines Big Data-Datenverarbeitungssystem zum Datenmanagement und Datenanalyse.

Weitere Vorteile, Einzelheiten und Weiterbildungen der Erfindung ergeben sich aus der nachfolgenden Beschreibung von Ausführungsbeispielen in Verbindung mit den Zeichnungen.

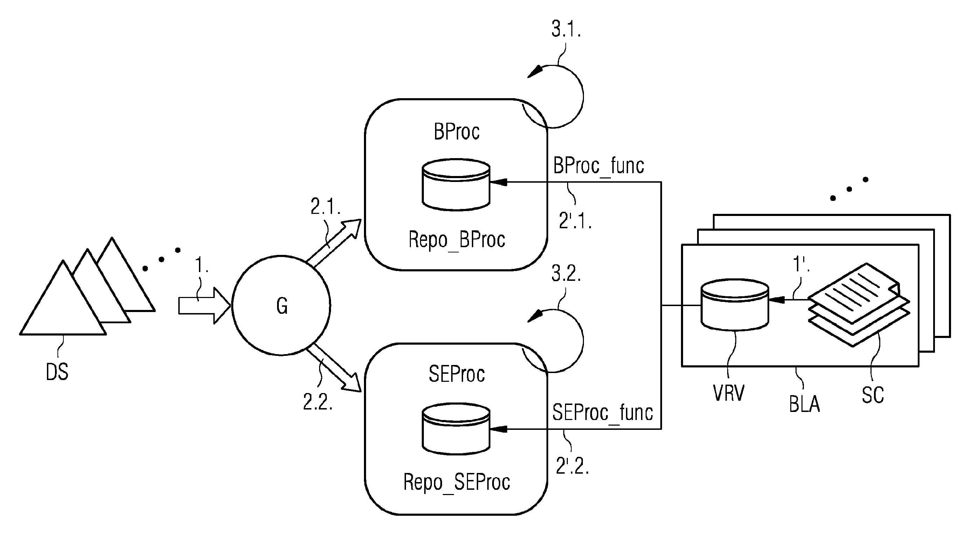

Es zeigt:
die Figur schematisch eine Architektur für ein Datenverarbeitungssystem zum Datenmanagement und/oder Datenanalyse.

Im Folgenden wird ein Datenfluss von Datenquellen DS in die jeweiligen Daten-Repositories z.B. in Form von Datenbanken der Batch-Layer und der Speed-Layer. Dabei sind beispielsweise folgende Einheiten bzw. Funktionen vorgesehen.
- DS: Datenquellen können u.a. Sensordatenquellen, Datenbanken, WebServices, File Stores, etc. sein. Die Datenquellen liefern Daten aktiv oder werden passiv um eine Lieferung neuer Daten angefragt, was mit dem Verfahrensschritt 1. bezeichnet wird.
- G (Gate): Die Datenschnittstelle G nimmt Daten von zumindest einer der Datenquellen DS entgegen (siehe 1.) und gibt diese an die Prozessoren Batch-BProc der Batch-Layer und Event-SEProc der Realtime-Ebene bzw. Speed-Layer weiter (siehe 2.1. und 2.2.).
- Batch-Prozessor BProc nimmt Daten vom Gate G entgegen (siehe 2.1.), speichert die Daten im Daten-Repository Repo_BProc ab und wendet auf allen Daten in Repo_BProc die Funktion BProc func an (siehe 3.1.).
- Repo_BProc: In diesem Repository werden Daten auf Veranlassung durch den Batch-Prozessor BProc gespeichert. Das zugrundeliegende Daten-Repository ist häufig speziell auf hohe Schreibzugriffe hin optimiert, und beinhaltet die Historie aller Daten, die in der Regel monoton wächst (spezielle Datenbereinigungs-Regeln können optional die Menge der Daten auf eine beschränkte Historie wie z.B. die letzten 10 Jahre beschränken).
- BProc_func ist eine Zugriffsfunktion: Anfragen mit Funktionen von einer Anwendung
- Ereignis (Event)-Prozessor SEProc: nimmt Daten vom Gate G entgegen (sieh 2.2.), speichert die Daten in das Daten-Repository Repo SEProc ab und wendet auf den verfügbaren Daten in Repo_SEProc die Zugriffsfunktion SEProc_func an (siehe 3.2.).
- Repo_SEProc: In diesem Repository werden Daten auf Veranlassung durch den Ereignis-Prozessor SEProc gespeichert. Das zugrundeliegende Daten-Repository ist zumeist gleichermaßen auf hohe Lese sowie auch Schreibzugriffe hin optimiert. Das Repository speichert nur eine definierte, im Allgemeinen kurze Historie an Daten.
- SEProc_func: ist eine Zugriffsfunktion für Anfragen mit Funktionen von einer Anwendung
- VRV (Integrated Virtual Result View): diese Integrationssicht verweist indirekt auf Repo_BProc und Repo_SEProc, indem sie durch Übergabe von BProc_func (siehe 2`.1.) und SEProc_func (siehe 2'.2.) ihre eigene integrierte Sicht per Abbildung mittels der jeweils übergebenen Rechenvorschriften an Datenanalyseresultate bindet, die durch die kontinuierliche / periodische Ausführung von BProc func durch BProc und SEProc func durch SEProc kontinuierlich / periodisch abgeleitet werden. Dabei erfolgt in Schritt 1'. die Ausführung der Funktionen erst, wenn die Applikation BLA, die als eine sogenannte Business Logic Application ausgebildet sein kann, auf die Werte(menge) der Datenanalyseresultate zugreift.
- Als SC wird der Sourcecode einer Applikation BLA bezeichnet.

Folgende Ausgestaltungen der oben genannten Einheiten bzw. Funktionen sind möglich:
- Die Datenquelle DS kann als Server ausgeprägt sein, der Gasturbinendaten zur Verfügung stellt
- Die Datenschnittstelle G kann als Softwareservice implementiert sein, der neue Gasturbinendaten von der Datenquelle DS periodisch abruft und dem Batch-Prozessor sowie dem Event-Prozessor übergibt
- Der Batch-Prozessor BProc kann in Form einer sogenannten Hadoop Map/Reduce Engine ausgebildet sein, die mittels spezieller Map/Reduce Jobs für BProc implementiert sein kann.
- Das Daten-Repository Repo BProc kann als sogenanntes Hadoop File System Store ausgestaltet sein.
- Der Event-Prozessor SEProc kann in Form einer Stream / Event-verarbeitenden Komponente wie Apache Storm mit einer Drools Fusion Complex Event Processing Engine ausgestaltet sein.
- Das Daten-Repository Repo SEProc kann als sogenannte In-Memory-Faktenbasis der Drools Fusion Complex Event Processing Engine ausgebildet sein.
- Die Integrationssicht VRV kann in Form von einer Softwarelibrary oder Softwareservice implementiert sein, der die Verbindung und Referenz zu den Prozessoren BProc und SEProc herstellt.
- Ein Beispiel für den Applikation Source Code SC wird hierbei auf Basis einer "Language-Integrated Query" gezeigt:
   // Late-binding to integrated data
   Enumerable< Example.GasTurbineEvent > events = VRV.bind();
   // Definition of a function that selects events with // specific properties
   Enumerable< Example.CriticalGasTurbineEvent > criticalEvents =
      from e in events
      where e.TurbineTemperature >
   someMaxTemperatureValue &&
      e.Vibration > someMaxVibrationValue && someExternalPredicate.Invoke(e) == true;
   // Run the selection function on BProc and SEProc and
   // access results from the integrated
   // virtual result view
   foreach(e in criticalEvents) Console.WriteLine(e);

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenverarbeitung, das durch ein zumindest eine Datenquelle (DS) aufweisendes Datenverarbeitungssystem ausgeführt wird,
wobei das Datenverarbeitungssystem mindestens eine Stapelverarbeitungs-Ebene, in der von der Datenquelle (DS) gesammelte Daten verarbeitet und Verarbeitungsergebnisse für deren Abfrage durch eine Applikation (BLA) aufbereitet werden,
und mindestens eine Echtzeitverarbeitungs-Ebene vorsieht, in der von der Datenquelle eintreffende Daten unmittelbar verarbeitet und Verarbeitungsergebnisse für die Applikation (BLA) aufbereitet werden,
**dadurch gekennzeichnet, dass**, wenn die Applikation (BLA) während ihrer Laufzeit auf wenigstens einen Wert der in den genannten Ebenen aufbereiteten Verarbeitungsergebnisse zugreift, dann eine für den Wert geeignete Rechenvorschrift der Applikation auf den wenigstens einen Wert angewendet wird.

2. Verfahren nach dem vorhergehenden Anspruch, **dadurch gekennzeichnet, dass** sich die geeignete Rechenvorschrift nach dem Datentyp des Wertes bestimmt.

3. Verfahren nach einem der vorhergehenden Ansprüche, **dadurch gekennzeichnet, dass** mittels der Echtzeit-Ebene eine zeitliche Verzögerung zwischen dem Sammeln von Daten, deren Verarbeitung in der Stapelverarbeitungs-Ebene und deren Aufbereitung überbrückt wird.

4. Verfahren nach einem der vorhergehenden Ansprüche, **dadurch gekennzeichnet, dass** das Datenverarbeitungssystem des weiteren eine Integrationssicht (VRV) vorsieht, die den Zugriff der Applikation auf die Verarbeitungsergebnisse in den genannten Ebenen koordiniert.

5. Verfahren nach dem vorhergehenden Anspruch, **dadurch gekennzeichnet, dass** die Funktionalität der Integrationssicht (VRV) derart ausgestaltet ist, dass eine dynamische Bindung mindestens eines Parameters der Rechenvorschrift an wenigstens einen solchen Wert ermöglicht wird.

6. Verfahren nach einem der vorhergehenden Ansprüche, **dadurch gekennzeichnet, dass** nur über festgelegte Zugriffsfunktionen (BProc func; SEProc_func) auf den wenigstens einen Wert der in den genannten Ebenen aufbereiteten Verarbeitungsergebnisse zugegriffen werden kann.

7. Verfahren nach einem der vorhergehenden Ansprüche, **dadurch gekennzeichnet, dass** das Datenverarbeitungssystem in Form einer sogenannten Lamda-Architektur ausgestaltet ist.

8. Verwendung des Verfahrens nach einem der vorhergehenden Ansprüche zum Betrieb einer Anlage.

9. Vorrichtung mit einem zumindest eine Datenquelle (DS) aufweisenden Datenverarbeitungssystem zur Datenverarbeitung für eine Anlage, das derart eingerichtet ist, dass dieses mindestens eine Stapelverarbeitungs-Ebene, in der von der Datenquelle (DS) gesammelte Daten verarbeitet und Verarbeitungsergebnisse für deren Abfrage durch eine Applikation (BLA) aufbereitet werden können, und mindestens eine Echtzeitverarbeitungs-Ebene aufweist, in der von der Datenquelle (DS) eintreffende Daten unmittelbar verarbeitet und Verarbeitungsergebnisse für die Applikation (BLA) aufbereitet werden können, **gekennzeichnet durch**
Mittel zum Ausführen einer Applikation, wobei während ihrer Laufzeit auf wenigstens einen Wert der in den genannten Ebenen aufbereiteten Verarbeitungsergebnisse zugegriffen werden kann und bei Zugriff eine für den Wert geeignete Rechenvorschrift der Applikation (BLA) auf den wenigstens einen Wert angewendet werden kann.

10. Vorrichtung nach dem vorhergehenden Anspruch, **dadurch gekennzeichnet, dass** das Datenverarbeitungssystem des weiteren eine Integrationssicht (VRV) aufweist, die den Zugriff der Applikation (BLA) auf die Verarbeitungsergebnisse in den genannten Ebenen koordinieren kann.

11. Vorrichtung nach einem der vorhergehenden Vorrichtungsansprüche, **dadurch gekennzeichnet, dass** die Funktionalität der Integrationssicht (VRV) derart ausgestaltet ist, dass eine dynamische Bindung mindestens eines Parameters der Rechenvorschrift an wenigstens einen solchen Wert möglich ist.

12. Vorrichtung nach einem der vorhergehenden Vorrichtungsansprüche, **dadurch gekennzeichnet, dass** das Datenverarbeitungssystem in Form einer sogenannten Lamda-Architektur ausgestaltet ist.

13. Anlage mit mindestens einer Vorrichtung nach einem der vorhergehenden Vorrichtungsansprüche.

14. Anlage nach dem vorhergehenden Anspruch, umfassend mindestens eine der folgenden Komponenten:
- eine Automatisierungsanlage,
- eine Fertigungsanlage,
- eine Produktionsanlage,
- eine Maschine,
- eine Windturbine,
- eine Strömungsmaschine,
- ein Energienetz,
- ein Stromverteilungsnetz,
- ein Lastverteilungsnetz,
- ein Kommunikationsnetz
- ein Krankenhausinformationssystem.

15. Computerprogrammprodukt mit Mitteln zur Durchführung des Verfahrens nach einem der vorgenannten Verfahrensansprüche, wenn das Computerprogrammprodukt in einer Vorrichtung oder Anlage, insbesondere nach einem der vorgenannten Vorrichtungsansprüche, zur Ausführung gebracht wird.
